# EUROPÄISCHE PATENTSCHRIFT

(11) **EP 0 571 725 B1**
(45) Veröffentlichungstag und Bekanntmachung des Hinweises auf die Patenterteilung: **09.04.1997**
(21) Anmeldenummer: 93104075.2
(22) Anmeldetag: 12.03.1993
(51) Int. Cl.: G02B 23/24, G02B 13/00

(54) **Endoskopobjektiv**
Objective for endoscopes
Objectif pour endoscope

(30) Priorität: 29.05.1992 DE 4217889
(43) Veröffentlichungstag der Anmeldung: 01.12.1993
(73) Patentinhaber: Richard Wolf GmbH, 75438 Knittlingen (DE)
(72) Erfinder: Zobel, Jürgen, Dipl.-Math., W-7518 Bretten (DE)
(74) Vertreter: Wilcken, Thomas, Dipl.-Ing.

(56) Entgegenhaltungen:
- EP-A- 0 093 599
- DE-A- 3 600 573
- US-A- 4 662 725
- US-A- 4 806 001
- PATENT ABSTRACTS OF JAPAN vol. 12, no. 361 (P-763) 28. September 1988; & JP-A-63 113 415
- SOVIET INVENTIONS ILLUSTRATED Section PQ, Week 8526, 8. August 1985 Derwent Publications Ltd., London, GB; Class P, AN 85-158083/26 & SU-A-1 129 579

## Beschreibung

Die Erfindung geht aus von einer Endoskopoptik, bei welcher der objektseitige Teil des Objektives eine negative Linsengruppe ist. Eine derartige Endoskopoptik ist beispielsweise aus DE-A-36 00 573 bekannt.

Endoskope weisen im Gegensatz zu Photoobjektiven und anderen optischen Systemen erhebliche Restfehler auf. Dies ist einerseits bedingt durch die vielen Bauteile, wie Objektiv, Okular und Bildweiterleitungssystem, und andererseits dadurch, daß aus Kosten- und Herstellungsgründen nur einfache optische Bauelemente verwendet werden können. Die Korrektur einer Endoskopoptik muß deshalb durch Abstimmung der Korrektur des Objektives mit der Korrektur von Okular und Bildweiterleitungssystem optimiert werden.

In dem gesamten optischen System treten Bildschärfe- und Bildmaßstabsfehler auf. Die hauptsächlichen Bildschärfefehler, wie Astigmatismus und Koma, werden in herkömmlicher Art dadurch korrigiert, daß die sogenannten Hinterlinsen der bildseitigen Linsengruppe als Achromate ausgebildet werden. Es muß nun noch dafür gesorgt werden, daß die Bildmaßstabsfehler, wie Verzeichnung und Bildfeldwölbung, in der Endoskopoptik minimiert oder gar ausgeschlossen werden. Aus den schon genannten Herstellungs- und Kostengründen wurde bisher die Verzeichnung bei Endoskopen nicht korrigiert. Deshalb weisen bekannte Endoskope bzw. Endoskopoptiken eine Verzeichnung von bis zu 20 % auf. Dies bedingt jedoch eine unwirkliche Abbildung, da in der Regel tonnenförmige Verzeichnungen auftreten, die behoben werden müssen. Entsprechendes gilt für die Bildfeldwölbung. Aufgrund der Bildfeldwölbung liegen die Schärfenebenen der Optik für die Mitte und für den Rand bei verschiedenen Fokuseinstellungen.

Bei Foto-, Film- und Videosystemen kann aber nur eine Fokusposition eingestellt werden. Aus diesem Grunde muß zwischen Mitte und Rand der Optik die Schärfeneinstellung vermittelt werden, d.h., es ist eine Mittelwertbildung bei der Schärfeneinstellung erforderlich. Diese hat allerdings den Nachteil, daß sie eine geringere Auflösung der Optik zur Folge hat. Eine Optik mit geebnetem Bildfeld besitzt dagegen eine größere Auflösung. Durch geeignete Linsenkombination kann die Bildfeldwölbung korrigiert werden. Da sie nur durch negative Brechkräfte reduziert wird, verzichtet man im Okular und im Bildweiterleitungssystem auf die Korrektur der Bildfeldwölbung, um die Bauteile in bezug auf ihren konstruktiven Aufbau und der Herstellung einfach zu halten. Im Objektiv gelingt die Korrektur zur Zeit jedoch nur teilweise, wenn zum Beispiel ein Negativ verwendet wird.

Durch die Erfindung soll für Endoskope bzw. Endoskopoptiken ein Objektiv mit einer negativen Linsengruppe vorgeschlagen werden, durch dessen konstruktiven Aufbau die in Rede stehenden Verzeichnungen ausgeschlossen werden sollen. Zudem soll die Bildfeldwölbung so stark reduziert werden, daß ein geebnetes Bildfeld entsteht.

Diese Aufgabe wird durch eine Endoskopoptik gelöst wie sie im Anspruch 1 definiert ist.

Der objektseitige Meniskus Lx ist dabei als Kittglied aus einer in Lichteinfallsrichtung gesehen ersten Linse L1 und einer zweiten Linse L2 ausgebildet, die auf gleicher Achse wie die den bildseitigen Meniskus bildende Linse L3 liegen, wobei für den Brechungsindex n und die Abbe-Zahl v der Linsen L1, L2 und L3 folgende Beziehungen gelten:
n(L2) < n(L1)
n(L2) < n(L3)
v(L2) > v(L1)
v(L2) > v(L3)

Bekanntlich verhält sich die Korrektur der Bildfeldwölbung proportional zu der Stärke der Krümmung eines Negatives. Das bedeutet, daß je stärker die Krümmung des Negatives ist, desto stärker ist auch die damit erreichbare Korrektur der Bildfeldwölbung. Aus technischen Gründen sind der Stärke der Krümmung jedoch Grenzen gesetzt. Vorteilhaft an der Erfindung ist, daß durch Verwendung zweier Linsen mit jeweils extremer Krümmung eine höhere Wirkung erzielt wird und somit eine noch stärkere Korrektur der Bildfeldwölbung erreicht wird als bei Verwendung nur einer Linse. Durch diese konstruktive Maßnahme wird ein geebnetes Bildfeld erreicht. Zudem wirkt sich eine meniskenförmige Ausbildung der Linsen positiv auf die Korrektur der Verzeichnung aus, da die an den Flächen auftretenden Einzelfehler der Verzeichnung hierdurch reduziert werden.

Weiterhin wird eine Behebung der Verzeichnung insbesondere dadurch erreicht, daß der objektseitige Meniskus, welcher aus einer äußeren Bikonvexlinse und einer inneren Bikonkavlinse besteht, als Kittglied ausgebildet ist, da der Verzeichnungsfehler an der Kittfläche ein negatives Vorzeichen aufweist. Das bedeutet, daß hierdurch die Fehler an den Meniskusaußenflächen teilweise kompensiert werden.

Zweckmäßigerweise ist die den bildseitigen Meniskus bildende Linse als Einzellinse ausgebildet und befindet sich auf gleicher Achse wie der objektseitige Meniskus. Es besteht auch die Möglichkeit, die bildseitige Linse als Asphäre auszubilden, womit eine Minderung der Verzeichnung am Randbereich erreicht wird.

Die beiden Menisken bzw. Meniskus und Asphäre sollten in eine gemeinsame Fassung gekittet werden. Diese Ausführung hat den Vorteil, daß die Linsen eine bauliche Einheit bilden und somit vor den anderen Bauteilen des Objektives ausgerichtet werden können.

Weiterhin ist der bildseitige Meniskus spielfrei in der gemeinsamen Fassung eingekittet. Das den objektseitigen Meniskus bildende Kittglied ist schlagfrei, d.h., zentriert auf den bildseitigen Meniskus ausgerichtet in der Fassung eingekittet. Hierdurch weist die verkittete Einheit aus objektseitiger Linsengruppe und bildseitig folgende Systemen weniger toleranzbedingte Restfehler auf.

Die Fassung des objektseitigen Teiles des Objektives weist einen den objektseitigen Meniskus zumindest teilweise übergreifenden Rand als Aperturblende auf, und es ist auf diesem Meniskus zusätzlich eine Blendkappe aufgekittet, so daß eine Abschirmung gegen Störlicht vorhanden ist.

Ausführungsbeispiele der Erfindung werden nachfolgend anhand der Zeichnungen beschrieben. Es zeigen:
- Figur 1: eine Endoskopoptik mit dargestelltem proximalen Ende und längsgeschnittenem distalen Ende,
- Figur 2: einen Längsschnitt durch das objektseitige Linsensystem eines Objektives,
- Figur 3: einen Längsschnitt durch das distale Ende einer Endoskopoptik mit 0° Geradeausblick,
- Figur 4: einen Längsschnitt durch das distale Ende einer Endoskopoptik mit 25° Vorausblick,
- Figur 5: einen Längsschnitt durch das distale Ende einer Endoskopoptik mit 50° Seitblick.

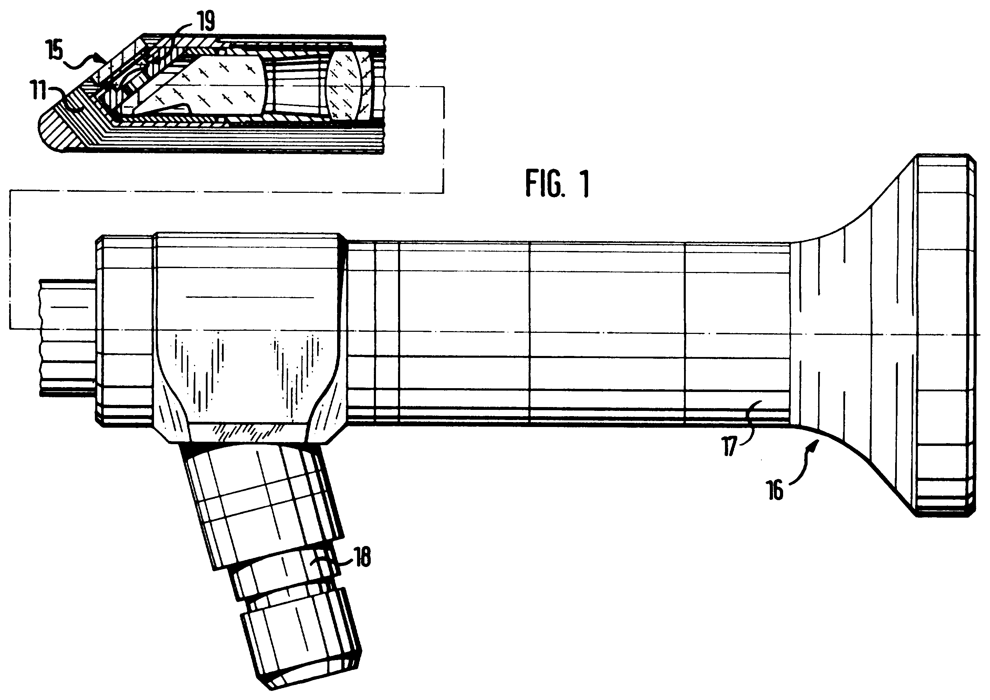

Figur 1 zeigt eine erfindungsgemäße Endoskopoptik, welche im wesentlichen aus einem Objektiv 19 am distalen Ende 15, einem Bildweiterleitungssystem und einem Okulartrichter 17 mit nicht dargestelltem Okular am proximalen Ende 16 besteht.

Das Objektiv 19 erzeugt das Bild des zu betrachtenden Gegenstandes. Dieses Bild wird durch ein dem Objektiv 19 folgendes optisches System weitergeleitet und gelangt schließlich zum Okulartrichter 17, in welchem das Bild abgebildet wird und dann vom Benutzer der Optik betrachtet werden kann.

Am Anschluß 18 kann ein zu einem Lichtprojektor führendes Lichtleitkabel angeschlossen werden, um Licht in den Lichtleiter 11 einzuspeisen, an dessen distalem Ende das Licht zur Beleuchtung des zu betrachtenden Objektes austritt.

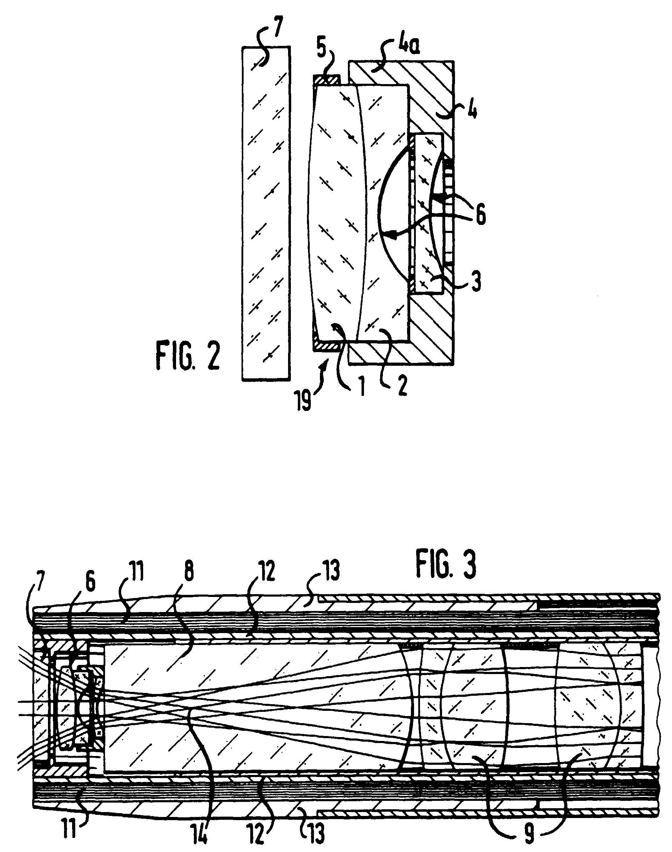

Der eigentliche Erfindungsgedanke zur Erzielung einer verzeichnungsfreien Endoskopoptik mit geebnetem Bildfeld liegt insbesondere in einer konstruktiven Maßnahme am Objektiv 19. Um dies zu verdeutlichen, ist in Figur 2 nochmals im Längsschnitt und größerem Maßstab der objektseitige Teil des Objektives mit seinen einzelnen Bestandteilen dargestellt.

Die bauliche Einheit 6 besteht aus zwei Menisken mit jeweils negativer Brechkraft. Der objektseitige Meniskus ist bei diesem Ausführungsbeispiel als Kittglied aus einer äußeren Bikonvexlinse 1 (L1) und einer inneren Bikonkavlinse 2 (L2) ausgebildet, die auf gleicher Achse wie die den bildseitigen Meniskus bildende Linse 3 (L3) liegen. Als alternative Lösung zu dem hier gezeigten Ausführungsbeispiel kann die bildseitige Linse 3 auch als Asphäre ausgebildet werden, d. h. eine von der Kugelform abweichende Form aufweisen, mit welcher weniger Verzeichnung am Randbereich erreicht werden kann. Die Brechungsindices n der einzelnen Linsen 1, 2 und 3 (L1, L2 und L3) und deren jeweilige Abbe-Zahl v sollen folgende Beziehungen erfüllen:
n(L2) < n(L1)
n(L2) < n(L3)
v(L2) > v(L1)
v(L2) > v(L3)

Die beiden Menisken befinden sich in einer gemeinsamen Fassung 4 und zwar derart, daß der bildseitige Meniskus 3 spielfrei in der Fassung 4 eingekittet ist und daß das den objektseitigen Meniskus bildende Kittglied 1, 2 schlagfrei, d.h. zentriert auf den bildseitigen Meniskus 3 ausgerichtet, in der Fassung eingekittet ist.

Die Fassung weist einen den objektseitigen Meniskus 1, 2 zumindest teilweise übergreifenden Rand 4a als Aperturblende auf, und zusätzlich ist auf die Bikonvexlinse 1 des objektseitigen Meniskus eine Blendkappe 5 aufgekittet, so daß ein Schutz gegen Störlicht gewährleistet ist. Diese hier dargestellte bauliche Einheit 6, bestehend aus den Einzelteilen 1, 2, 3, 4 und 5, ist auf ein bildseitig folgendes optisches System, welches teilweise in den Figuren 3, 4 und 5 dargestellt ist, ausgerichtet.

Vor der Einheit 6 des Objektives befindet sich jeweils objektseitig ein Ausblickfenster 7. Im übrigen sind verschiedene Ausführungsbeispiele von Objektiven 19 und weiterführendem Bildleitungssystem 8, 9 bzw. 8, 10 von erfindungsgemäßen Endoskopoptiken dargestellt, wobei die Ausführungsformen für verschiedene Blickrichtungen gelten.

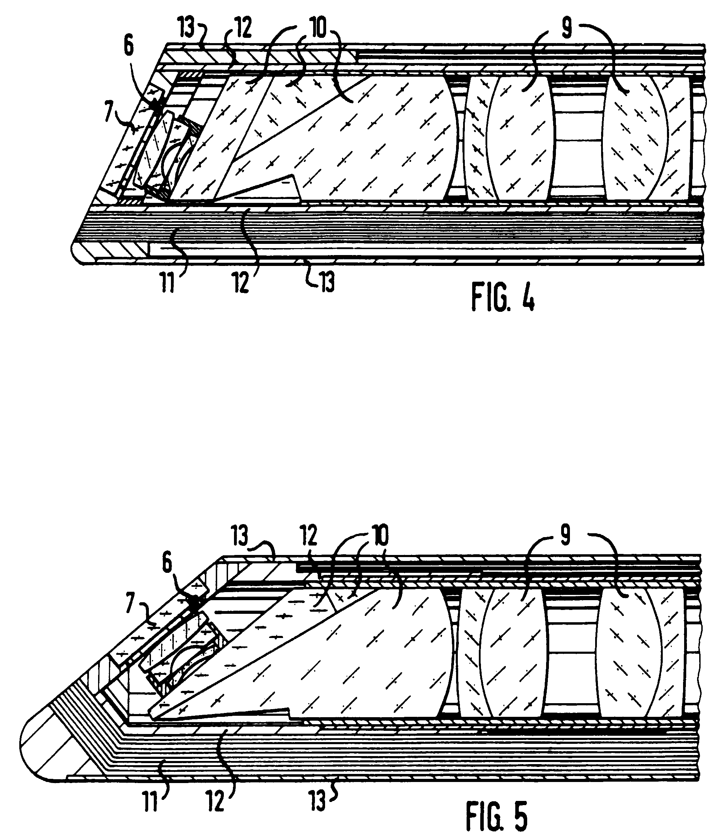

Figur 3 zeigt eine Endoskopoptik für 0° Geradeausblick, Figur 4 eine Endoskopoptik für 25° Vorausblick und Figur 5 eine Optik für 50° Steilblick. Bei entsprechender Linsen- bzw. Ablenkprismenwahl sind natürlich auch andere Blickrichtungen möglich. Der prinzipielle Aufbau aller Ausführungsbeispiele ist gleich. Die Endoskopoptiken mit nicht geradem Ausblick unterscheiden sich jedoch konstruktiv von der Optik mit geradem Ausblick dadurch, daß der optische Aufbau nicht symmetrisch wie in Figur 3 ist, sondern asymmetrisch, was auch eine andere Form und Anordnung des Lichtleiters 11 bedingt.

In allen Ausführungsbeispielen ist der objektseitige Teil 7, 6 des Objektives zu erkennen, und zusätzlich ist das das Bild weiterleitende optische System erkennbar. Im Anschluß an die objektseitige negative Linsengruppe 6 folgt beim geraden Ausblick eine stabförmige Plankonvexlinse 8, bei anderen Blickrichtungen entsprechende Ablenkprismen 10, und anschließend werden die Strahlengänge 14 durch die bildseitige Linsengruppe 9, die sog. Hinterlinsen, geführt. Die Hinterlinsen 9 sind als Achromate ausgebildet. Der Verlauf der Strahlengänge 14 wurde zur Verdeutlichung in Figur 3 dargestellt.

Die gesamten optischen Bauelemente 7, 6, 8 bzw. 10 und 9 befinden sich in einem Innenrohr 12, welches vom Lichtleiter 11 insgesamt (Figur 3) oder teilweise (Figuren 4 und 5) umschlossen ist. Im übrigen ist das gesamte optische System einschließlich Lichtleiter 11 von einem Hüllrohr 13 umgeben.

Im übrigen könnten auch die in Figur 2 dargestellte Linse 3 durch eine Asphäre und das aus den beiden Linsen 1 und 2 bestehende Kittglied durch eine Einzellinse ersetzt werden.

## Patentansprüche

1. Endoskopoptik, bei welcher der objektseitige Teil des Objektives (19) eine negative Linsengruppe (6) ist, die aus zwei Menisken mit jeweils negativer Brechkraft besteht, wobei der objektseitige Meniskus Lx (1,2) und der bildseitige Meniskus Ly (3) auf gleicher Achse liegen, dadurch gekennzeichnet, daß der objektseitige Meniskus Lx als Kittglied aus einer in Lichteinfallsrichtung gesehen ersten Linse L1 (1) und einer zweiten Linse L2 (2) besteht, die auf gleicher Achse wie die den bildseitigen Meniskus Ly bildende Linse L3 (3) liegen, und daß für den Brechungsindex n und die Abbe-Zahl v der Linsen L1, L2 und L3 folgende Beziehungen gelten:
n(L2) < n(L1)
n(L2) < n(L3)
v(L2) > v(L1)
v(L2) > v(L3)

2. Endoskopoptik nach Anspruch 1, dadurch gekennzeichnet, daß die den bildseitigen Meniskus Ly bildende Linse als Asphäre ausgebildet ist.

3. Endoskopoptik nach einem der Ansprüche 1 und 2, dadurch gekennzeichnet, daß beide Menisken in eine gemeinsame Fassung (4) gekittet sind und mit dieser Fassung (4) eine bauliche Einheit (6) bilden, die auf bildseitig folgende optische Bauelemente (8,9 bzw. 10,9) ausgerichtet ist.

4. Endoskopoptik nach Anspruch 3, dadurch gekennzeichnet, daß der bildseitige Meniskus (3) spielfrei in der Fassung (4) eingekittet ist und daß der objektseitige Meniskus (1,2) schlagfrei auf den bildseitigen Meniskus (3) ausgerichtet in der Fassung (4) eingekittet ist.

5. Endoskopoptik nach einem der Ansprüche 3 und 4, dadurch gekennzeichnet, daß die Fasssung (4) einen den objektseitigen Meniskus (1,2) zumindest teilweise übergreifenden Rand (4a) als Aperturblende aufweist.

6. Endoskopoptik nach einem der Ansprüche 1 bis 5, dadurch gekennzeichnet, daß auf den objektseitigen Meniskus (1,2) eine Blendkappe (5) gekittet ist.

## Claims

1. An optical system for an endoscope in which the object-side part of the objective (19) is a negative lens cluster (6) which comprises two menisci each having negative refracting power, wherein the object-side meniscus Lₓ (1,2) and the image-side meniscus L_{y} (3) lie on the same axis, characterised in that the object-side meniscus Lₓ is composed as a cemented member from, seen in the direction of incidence, a first lens L1 (1) and a second lens L2 (2), these lenses lying on the same axis as the lens L3 (3) forming the image-side meniscus L_{y}, and that the following relationships apply for the refractive index n and the Abbe number v of the lenses L1, L2 and L3:
n(L2) < n(L1)
n(L2) < n(L3)
v(L2) > v(L1)
v(L2) > v(L3)

2. An optical system for an endoscope according to claim 1, characterised in that the lens forming the image-side meniscus L_{y} is designed as an aspherical lens.

3. An optical system for an endoscope according to claim 1 or 2, characterised in that both menisci are cemented into a common holder (4), and with this holder (4), form a constructional unit (6) which is aligned with optical components (8, 9 or 10, 9) following on the image side.

4. An optical system for an endoscope according to claim 3, characterised in that the image-side meniscus (3) is cemented into the holder (4) without backlash, and that the object-side meniscus (1,2) is cemented into the holder (4) to run true, aligned with the image-side meniscus (3).

5. An optical system for an endoscope according to claim 3 or 4, characterised in that the holder (4) comprises, as an aperture stop, an edge (4a) at least partially overlapping the object-side meniscus (1,2).

6. An optical system for an endoscope according to one of claims 1 to 5, characterised in that a stop cap (5) is cemented on the object-side meniscus (1,2).

## Revendications

1. Optique d'endoscope, dans laquelle la partie, située côté objet, de l'objectif (19) est un groupe de lentilles (6) formant une image renversée, qui est constitué de deux ménisques ayant chacun une réfringence négative, le ménisque Lx situé côté objet (1, 2) et le ménisque Ly situé côté image (3) étant placés sur le même axe, caractérisée en ce que le ménisque Lx situé côté objet est constitué, sous forme d'un organe assemblé par collage, d'une première lentille L1 (1), en considérant la direction d'incidence de la lumière, et d'une deuxième lentille L2 (2), qui sont placées sur le même axe que la lentille L3 (3) formant le ménisque Ly situé côté image, et en ce qu'il existe, pour l'indice de réfraction n et le coefficient d'Abbe v des lentilles L1, L2 et L3, les relations suivantes:
n(L2) < n(L1)
n(L2) < n(L3)
v(L2) > v(L1)
v(L2) > v(L3)

2. Optique d'endoscope selon la revendication 1, caractérisée en ce que la lentille formant le ménisque Ly situé côté image est réalisée sous une forme asphérique.

3. Optique d'endoscope selon l'une des revendications 1 et.2, caractérisée en ce que les deux ménisques sont assemblés par collage dans une monture commune (4) et forment, avec cette monture (4), un ensemble structurellement unitaire (6), qui est centré sur des composants optiques (8, 9 ou 10, 9) placés à la suite côté image.

4. Optique d'endoscope selon la revendication 3, caractérisée en ce que le ménisque situé côté image (3) est inséré sans jeu, par collage, dans la monture (4) et en ce que le ménisque situé côté objet (1, 2) est inséré sans aucune excentricité, par collage, dans la monture (4), en étant centré sur le ménisque situé côté image (3).

5. Optique d'endoscope selon l'une des revendications 3 et 4, caractérisée en ce que la monture (4) comporte un rebord (4a) constituant un diaphragme d'ouverture, qui enserre, au moins partiellement, le ménisque situé côté objet (1, 2).

6. Optique d'endoscope selon l'une des revendications 1 à 5, caractérisée en ce qu'une coiffe (5) formant un diaphragme est collée sur le ménisque situé côté objet (1, 2).
